# EUROPÄISCHE PATENTSCHRIFT

(11) **EP 1 308 237 B1**
(45) Veröffentlichungstag und Bekanntmachung des Hinweises auf die Patenterteilung: **17.03.2004**
(21) Anmeldenummer: 02021465.6
(22) Anmeldetag: 25.09.2002
(51) Int. Cl.: B23Q 1/01, B23Q 39/04

(54) **Werkzeugmaschine**
Machine tool
Machine-outil

(30) Priorität: 05.11.2001 DE 10153807
(43) Veröffentlichungstag der Anmeldung: 07.05.2003
(73) Patentinhaber: EMAG MASCHINENFABRIK GMBH, D-73084 Salach (DE)
(72) Erfinder: Eicher, Gerrit, 51491 Overath (DE)
(74) Vertreter: Eder, Thomas, Dr.-Ing.

(56) Entgegenhaltungen:
- EP-A- 0 885 686
- WO-A-91/16161
- DE-A- 19 504 369
- DE-A- 19 841 449
- DE-A- 19 916 212
- DE-C- 19 528 341
- FR-A- 2 540 414
- US-A- 3 792 633

## Beschreibung

Die vorliegende Erfindung betrifft eine Werkzeugmaschine, insbesondere ein Bearbeitungszentrum, nach dem Oberbegriff des Anspruchs 1.

Solche Werkzeugmaschinen finden in der Praxis Anwendung als Bearbeitungszentren, in denen vorwiegend metallische Werkstücke durch Drehen, Fräsen und Bohren etc. bearbeitet werden können.

Diese Bearbeitungszentren bieten die Möglichkeit, mehrere, nacheinander erfolgende Arbeitsschritte an mehreren zu bearbeitenden Werkstücken durchzuführen, in dem gleichzeitig ein Werkstück einem ersten Arbeitsgang unterzogen wird, während das diesem vorausgegangene Werkstück bereits dem zweiten Arbeitsgang unterworfen wird.

Besonders vorteilhaft können auf diese Weise die Werkstücke nacheinander verschiedenen Bearbeitungsschritten unterworfen werden, ohne dass ein manuelles Eingreifen erforderlich wäre. Insbesondere die aus dem Stand der Technik bekannten Bearbeitungszentren bieten diese Funktion an mit dem Ziel, bei der Bearbeitung der Werkstücke Zeit und damit Kosten einzusparen.

Bei der aus der DE 195 04 369 A1 bekannten Mehrspindelwerkzeugmaschine sind mehrere Spindeln in einem um eine Achse drehbaren Gestell vorgesehen, wobei die Spindeln jeweils ein Werkstück aufnehmen und in Rotation versetzen können. Die Anordnung der Spindeln zueinander ist dabei starr, das gesamte Gestell kann jedoch komplett durch eine Drehbewegung um eine zentrale Achse beispielsweise um 45° weiterbewegt werden, so dass das Werkstück an jeder Spindel in einen neuen Arbeitsbereich bzw. Arbeitssektor mit einem dort vorgesehenen Werkzeug gelangt. Das Werkzeug in jedem Arbeitssektor wird dann auf das Werkstück zubewegt, wobei dieses bearbeitet werden kann, wenn es in Rotation versetzt ist oder auch wenn es still steht.

Eine solchermaßen starre Anordnung der einzelnen Spindeln bringt jedoch den Nachteil mit sich, dass die in jedem Arbeitssektor anzuordnenden Werkzeuge bewegbar sein müssen für solche - insbesondere radialen - Bearbeitungsbewegungen, welche nicht von der Spindeleinheit ausgeführt werden können. Die Positionierung der an den Spindeleinheiten befestigten Werkstücke kann ausschließlich durch Drehbewegung der gesamten Spindelanordnung bzw. mit der an jeder Spindel vorgesehenen vertikalen Verschiebbarkeit der Werkstückhalterung erzielt werden, so dass die horizontale Position jedes Werkstücks innerhalb der Bearbeitungssektoren feststeht und üblicherweise auf einer die Sektoren gleichmäßig teilenden Mittellinie gewählt wird.

Die DE 199 16 212 A1 versucht hier abzuhelfen, indem die Spindeln innerhalb eines Arbeitssektors auf einer vorwiegend kreisförmigen Bahn bewegbar sind. Dadurch soll gewährleistet werden, dass eine Spindeleinheit innerhalb eines Bearbeitungssektors beispielsweise zwei verschiedene Werkzeuge anfährt, während sich in der gleichen Zeit in einem anderen Sektor die Spindeleinheit nicht bewegt. Dadurch können unterschiedlich zeitintensive Bearbeitungsvorgänge optimal miteinander kombiniert werden. Auch erlaubt die Ausführung eine flexiblere Anordnung der Werkzeuge in den einzelnen Bearbeitungssektoren.

Auch diese Maschine bringt jedoch den Nachteil mit sich, dass innerhalb der Sektoren nur eine begrenzte Anzahl von Werkzeugen angeordnet werden kann. Darüber hinaus erfordert die DE 199 16 212 ebenso wie die DE 195 04 369 nach einem vollständig durchlaufenen Bearbeitungszyklus das periodische Zurückdrehen der gesamten Spindelanordnung um nahezu 360°, um die einzelnen Spindeln wieder in ihre Ausgangslage zurückzubringen, wenn kostenaufwendige Schleifkontakte zur Vermeidung von sich verdrehenden Zuleitungen vermieden werden sollen. Weiterhin nachteilig fällt bei dem genannten Stand der Technik auf, dass die in jedem Bearbeitungssektor vorgesehenen Werkzeuge radial verschiebbar angeordnet sein müssen, wenn die jeweilige Bearbeitung eine solche radiale Bewegung von Werkstück und Werkzeug relativ zueinander erfordert. Für jedes Werkzeug oder eine dieses aufnehmende Werkzeugführung ist somit ein kostenverursachender eigener Antrieb erforderlich.

Aufgabe der Erfindung ist es daher, bei einer Werkzeugmaschine der gattungsgemäßen Art den Aufwand für eine mehrachsige Werkstückbearbeitung zu verringern, den Platzbedarf für die bzw. innerhalb der Bearbeitungsstationen zu verringern und einen zeitsparenden Bewegungsablauf für die einzelnen Spindeln bzw. Werkzeuge anzubieten.

Die Aufgabe wird gelöst durch eine Werkzeugmaschine nach Anspruch 1.

Die Erfindung beruht auf der Erkenntnis, dass es vorteilhaft ist, wenigstens eine das Werkstück tragende Arbeitsspindeleinheit so vorzusehen, dass sie innerhalb eines Bearbeitungssektors in radialer Richtung verschiebbar angeordnet ist. Die Arbeitsspindeleinheit, die durch Schwenkung um eine zentrale Achse der Werkzeugmaschine in verschiedene, um diese Achse angeordnete Bearbeitungssektoren positionierbar ist, erhält dadurch einen zusätzlichen Freiheitsgrad in radialer Richtung, so dass insbesondere eine Bewegung des Werkstücks auf ein Werkzeug hin zur Positionierung des Werkstücks und/oder zur Bearbeitung desselben durch eine solche radiale Bewegung der Arbeitsspindeleinheit möglich wird.

Durch diese zusätzliche radiale Beweglichkeit der Arbeitsspindeleinheit besteht die Möglichkeit, innerhalb eines Bearbeitungssektors auf unterschiedlichen Teilkreisen angeordnete Werkzeuge anzufahren und mit dem Werkstück in Kontakt zubringen, so dass für keines oder zumindest nicht für jedes Werkzeug eine eigene Vorschubvorrichtung erforderlich ist. In Verbindung mit der vertikalen Beweglichkeit der Werkstücke durch geeignet ausgebildete Arbeitsspindeleinheiten können somit in jedem Bearbeitungssektor mehrere Werkzeuge in unterschiedlichen Abständen zur zentralen Achse und in unterschiedlichen vertikalen Positionen mit dem Werkzeug in Kontakt gebracht werden.

Eine solche radiale Bewegung der Arbeitsspindeleinheit erfolgt dabei vorteilhafterweise entkoppelt von der Positionierbewegung des Arbeitsspindelgestelles, in welchem alle Arbeitsspindeleinheiten der Maschine gehalten werden. Wird dieses Gestell beispielsweise um 45° um die zentrale, meist vertikale Achse gedreht, um die einzelnen Arbeitsspindeleinheiten jeweils in einem neuen Bearbeitungssektor zu positionieren, so können anschließend einzeln ausgewählte Arbeitsspindeleinheiten zusätzlich in radialer Richtung bewegt werden, während dies bei anderen Arbeitsspindeleinheiten unterbleiben kann. Vorteilhafterweise kann daher in einem Bearbeitungssektor ein verhältnismäßig zeitaufwendiger Bearbeitungsschritt ablaufen, während in einem weiteren Bearbeitungssektor zwei verschiedene, jeweils weniger zeitaufwendige Bearbeitungsschritte ablaufen können, in dem die Arbeitsspindeleinheit nach dem ersten dieser beiden Bearbeitungsschritte das Werkstück zu dem zweiten, im gleichen Bearbeitungssektor angeordneten Werkzeug bewegt, wobei das zweite Werkzeug in einem radial zur zentralen Achse größeren oder kleineren Abstand als das erste Werkzeug angeordnet sein kann..

In einer vorteilhaften Ausführungsform der Erfindung ist das Gestell zur Aufnahme der Arbeitsspindeleinheiten in Form einer Brücke ausgebildet. Diese Brücke, welche in vorteilhafter Weise das Rotationszentrum für die gesamte Positionierbewegung aller Arbeitsspindeleinheiten stabil und symmetrisch überbrückt, ermöglicht in vorteilhafter Weise die erfindungsgemäße radiale Bewegung wenigstens einer Arbeitsspindeleinheit.

Diese Brücke oder Brückeneinheit ist dabei mit einer Laufbahn versehen, auf welcher die Arbeitsspindeleinheit radial zur zentralen Achse bewegbar ist bzw. geführt wird. Die als Halterung für die Arbeitsspindeleinheiten fungierende Brücke wird dabei in einer vorteilhaften Ausführungsform der Erfindung auf einer um die zentrale Achse angeordneten, vorzugsweise kreisförmigen Führungsbahn bewegt. Die Brücke kann dabei an mehreren Punkten oder auch über Linien- oder Flächenkontakte über geeignete Gleitschuhe, Gleit- oder Rollenlager auf der Führungsbahn bewegt werden, wodurch in vorteilhafter Weise eine ausreichende Stabilität der Brückenführung gewährleistet wird.

Insbesondere kann die Brücke mit zwei, jedoch auch mit weiteren als Auflage dienenden Füssen auf der Führungsbahn oder anderen, geeigneten Stützflächen aufliegen. Denkbar ist beispielsweise eine kreuzförmig ausgebildete Brücke, welche mit vier Füssen auf der Führungsbahn aufsitzt.

In einer vorteilhaften Ausführungsform der Erfindung wird die Brücke von wenigstens einem Antrieb so angetrieben, dass sie sich punktsymmetrisch um die zentrale Achse dreht. Für eine gleichmäßige Krafteinleitung ist ebenso denkbar, mehrere, idealerweise gegenüber liegende oder über den Umfang gleichmäßig verteilte Antriebe vorzusehen, welche insbesondere Linearantriebe sein können.

Eine vorteilhafte Ausführungsform der Erfindung zeichnet sich dadurch aus, dass die auf der Brücke für die Bewegung der Arbeitsspindeleinheit ausgebildete Laufbahn sich im Wesentlichen über den ganzen Brückenweg erstreckt. Dies bedeutet für den Fall von beispielsweise nur einer vorgesehenen Arbeitsspindeleinheit, dass diese aus einem ersten Spindellagenbereich an einem Ende der Brückeneinheit über das Zentrum hinweg entlang der Laufbahn in einen zweiten Spindellagenbereich am anderen Ende der Brücke bewegbar ist. Die Spindel bewegt sich damit quasi entlang eines Durchmessers des Kreises, auf den sich die Auflagepunkte der Brückeneinheit bewegen.

Die derartige Beschaffenheit der Brückeneinheit ermöglicht die Positionierung einer Arbeitsspindeleinheit aus einem ersten Bearbeitungssektor heraus in einen gegenüber liegenden zweiten Bearbeitungssektor auf kürzestem Wege, wodurch Zeit gespart werden kann.

Die Positionierung einer Arbeitsspindeleinheit, die auf diese Weise entlang einer Laufbahn einer Brückeneinheit geführt werden kann, kann dann vorteilhafterweise auf folgende Art erfolgen:
Die Arbeitsspindeleinheit die sich zunächst in einem ersten Spindellagenbereich auf einer Seite der Brückeneinheit befinden soll, kann durch ausschließliches Schwenken der Brückeneinheit um nicht mehr als 180° um die zentrale Achse in all die Bearbeitungssektoren geschwenkt werden, welche sich innerhalb dieses 180°-Sektors befinden. Soll die Arbeitsspindeleinheit dann in einem Bearbeitungssektor positioniert werden, welcher außerhalb dieses 180°-Sektors (und damit auf der gegenüber liegenden Hälfte des Schwenkkreises) liegt, so wird die Arbeitsspindeleinheit entlang der Laufbahn auf der Brückeneinheit in den zweiten Spindellagenbereich bewegt, welcher am anderen Ende der Brücke oder zumindest im dem ersten Spindellagenbereich gegenüber liegenden Abschnitt der Brückeneinheit angeordnet ist. Durch diese Bewegung gelangt die Arbeitsspindeleinheit in den Bereich der Bearbeitungssektoren, welche sich zwischen 180° und 360° befinden. Eine eventuell erforderliche weitere Positionierung der Arbeitsspindeleinheit in einem anderen Bearbeitungssektor dieses Halbkreises erfolgt dann wieder durch einfaches Schwenken der Brückeneinheit.
Innerhalb jedes Bearbeitungssektors kann die Arbeitsspindeleinheit dann durch gezielte Bewegung entlang der Laufbahn auf der Brückeneinheit noch um ein gewähltes radiales Maß versetzt werden, so dass, wie oben angeführt, beispielsweise mehrere, in einem Bearbeitungssektor angeordnete Werkzeuge, mit dem Werkstück in Berührung gebracht werden können.

In einer weiteren vorteilhaften Ausführungsform der Erfindung ist eine Steuereinheit vorgesehen, welche die Schwenkbewegung der Brückeneinheit und die Bewegung der Arbeitsspindeleinheit von dem einen in den anderen Spindellagenbereich in Abhängigkeit von den auszuführenden Bearbeitungsschritten so ansteuert, dass die Gesamtbearbeitungszeit für ein Werkstück minimiert wird.

Grundsätzlich ist die Schwenkbewegung der Brückeneinheit natürlich auch in einem über 180° hinausgehenden Bereich denkbar. So ist es ohne Weiteres möglich, sogar auch eine Schwenkbewegung um mehr als 360° auszuführen. Mit der nach wie vor zusätzlich vorgesehenen Möglichkeit, die Arbeitsspindeleinheit über die Laufbahn der Brückeneinheit schnell in die gegenüber liegende Position bzw. an das andere Ende der Brückeneinheit zu verfahren, ergibt sich eine Vielzahl von Möglichkeiten zur Positionierung der Arbeitsspindeleinheit in einem bestimmten Bearbeitungssektor. Entsprechend hoch ist die Auswahl möglicher Positionierungsschritte, aus denen beispielsweise über die Steuereinheit eine zeitlich optimierte Kombination auswählbar ist.

In einer weiteren vorteilhaften Ausführungsform der Erfindung sind mehrere, miteinander starr verbundene Brückeneinheiten vorgesehen. Dabei kann auf jeder Brückeneinheit eine Arbeitsspindeleinheit im Sinne der zuvor beschriebenen Weise bewegt werden. Denkbar ist hier beispielsweise eine über den Durchmesser des Schwenkkreises verlaufende zentrale Brückeneinheit, so wie zuvor beschrieben. Ergänzend dazu ist die Anordnung von zwei weiteren Brückeneinheiten denkbar, welche sich vorzugsweise parallel rechts und links der zentrisch angeordneten ersten Brückeneinheit befinden.

Auch auf diesen Brückeneinheiten ist jeweils eine Arbeitsspindeleinheit verschiebbar gelagert, so dass auch diese Einheit von einem Ende der Brücke zum anderen Ende bewegt werden kann. Der maximal zurücklegbare Weg ist hierbei kürzer als bei der zentral angeordneten Brückeneinheit. Trotzdem kann auch hier durch Bewegung der Arbeitsspindeleinheit von einem zum anderen Ende dieser Brückeneinheit schnell ein anderer Bearbeitungssektor angewählt werden, welcher sich zwar nicht unmittelbar gegenüber, aber doch auch nicht benachbart zum aktuellen Bearbeitungssektor befinden könnte.

Auf diese Weise können mehrere Arbeitsspindeleinheiten durch ein geeignetes Verfahren entlang der Brückenlaufbahnen und in Kombination mit der Drehbewegung der Brückeneinheit an sich vorteilhaft sehr flexibel den einzelnen Bearbeitungssektoren durchgeführt werden.

In einer weiteren vorteilhaften Ausführungsform der Erfindung ist eine Brückeneinheit vorgesehen, auf der zwei Arbeitsspindeleinheiten bewegt werden können. Jede Arbeitsspindeleinheit bewegt sich dabei in einem eigenen Spindellagenbereich in jeweils einen Endbereich der Brückeneinheit. Ein vollständiges Herüberfahren einer Arbeitsspindeleinheit von einem Ende der Brückeneinheit zum anderen ist dann nicht mehr vorgesehen. Der Vorteil dieser Ausführungsform liegt in der Verdopplung der Zahl der Arbeitsspindeleinheiten, wodurch die Bearbeitungszeit der Werkstücke insgesamt reduziert werden kann.

Die radiale Beweglichkeit der beiden Arbeitsspindeleinheiten wird durch bereits vorgestellte Laufbahnen auf der Brückeneinheit realisiert, wobei die bestmögliche radiale Versetzbarkeit auch dadurch erzielt werden kann, dass die Brückeneinheit nach wie vor mit einer durchgehenden Laufbahn ausgestattet ist, auf der sich nun zwei Arbeitsspindeleinheiten bewegen können.

In einer weiteren vorteilhaften Ausführungsform der Erfindung ist die Brückeneinheit so ausgebildet, dass sie wenigstens drei über einen Umfang um die zentrale Achse angeordnete Spindeleinheiten aufnimmt. Jede Spindeleinheit ist dabei wieder innerhalb eines Spindellagenbereichs radial beweglich. Die Brückeneinheit hat in diesem Fall in der Draufsicht beispielsweise die Form eines Sterns, welcher durch drei im Winkel von 120° zueinander angeordnete und aufeinander zulaufende Laufbahnen angedeutet wird. Eine solche Brückeneinheit hätte dann beispielsweise drei Auflagestellen, mit denen sie auf der Führungsbahn um die zentrale Achse aufliegen würde.

Grundsätzlich kann die Brückeneinheit so ausgebildet sein, dass auch mehr als drei Arbeitsspindeleinheiten von der Brückeneinheit getragen werden. Jede Arbeitsspindeleinheit kann wiederum in einem für sie vorgesehenen Spindellagenbereich der Brückeneinheit in radialer Richtung um ein bestimmtes Maß bewegt werden. Die Anzahl der insgesamt vorgesehenen Arbeitsspindeleinheiten könnte dabei wiederum die Gestalt der Brückeneinheit in der Draufsicht bestimmen. So würde die Brückeneinheit im Falle von fünf Arbeitsspindeleinheiten beispielsweise angenähert die Form eines fünfzackigen Sterns aufweisen.

In einer weiteren vorteilhaften Ausführungsform der Erfindung wird wenigstens eine Arbeitsspindeleinheit von der Brückeneinheit so getragen, dass zusätzlich zu der in radialer Richtung vorgesehenen Bewegungsfreiheit auch eine tangentiale, zu vertikalen und radialen Bewegungsrichtung senkrechte Bewegung möglich ist. Das bedeutet, dass die Arbeitsspindeleinheit, nach dem sie durch Schwenkbewegung der Brückeneinheit in einem Bearbeitungssektor positioniert wurde, sowohl in radialer Richtung als auch quer zu dieser innerhalb des Bearbeitungssektors bewegt werden kann. Das von der Arbeitsspindeleinheit getragene Werkstück kann somit innerhalb des Bearbeitungssektors und unter Nutzung der ohnehin vertikalen Bewegungsmöglichkeit jeder Arbeitsspindel dreidimensional innerhalb des Bearbeitungssektors bewegt werden. Dies ermöglicht in vorteilhafter Weise ein Höchstmaß an Flexibilität und Freiheit, um das Werkstück mit einem oder mehreren Werkzeugen pro Bearbeitungssektor in Berührung zu bringen. Dies wiederum bietet eine erhebliche Freiheit in der Anordnung des bzw. der einzelnen Werkzeuge.

In einer weiteren vorteilhaften Ausführungsform der Erfindung ist eine Brückeneinheit mit sich kreuzenden Laufbahnen vorgesehen. Diese können sich dabei beispielsweise im rechten Winkel kreuzen und jeweils für die Aufnahme einer oder zweier Arbeitsspindeleinheiten vorgesehen sein. Dabei können die Arbeitsspindeleinheiten in vorteilhafter Weise rechtwinklig zueinander in der gleichen Ebene verfahren werden, wobei jede Arbeitsspindeleinheit entlang der ihr zugedachten Laufbahn der Brückeneinheit bewegbar ist.

Die Schwenkbewegung der Brückeneinheit kann grundsätzlich zur Positionierung der Arbeitsspindeleinheiten vor einem bestimmten Bearbeitungsvorgang erfolgen. Ebenso kann diese Schwenkbewegung, welche insbesondere als Rotation der Brückeneinheit um die zentrale Achse erfolgt, jedoch alternativ oder zusätzlich auch als Bearbeitungsbewegung ausgeführt werden, so dass während der Bewegung der Brückeneinheit das Werkstück beispielsweise zur Bearbeitung an einem Werkzeug entlang geführt wird.

Die radiale Bewegung der Arbeitsspindeleinheiten entlang der Brückeneinheit kann völlig unabhängig von der Schwenkbewegung der Brückeneinheit erfolgen, so dass die eine Bewegung erfolgen kann, ohne das die andere Bewegung ausgeführt werde muss. Selbstverständlich ist aber auch eine mechanische und/oder steuerungstechnische Kopplung der Bewegungen denkbar. Dann kann eine Bewegung des Werkstückes beispielsweise auf einer Geraden, die nicht radial verläuft, durch geeignete Überlagerung der tangentialen Brückenschwenkbewegung mit der radialen Verschiebung der Arbeitsspindeleinheit realisiert werden. Ergänzt durch die vertikale Verschiebbarkeit der Werkzeughalterung in der Arbeitsspindeleinheit ergibt sich die Möglichkeit einer dreidimensionalen Bewegung des Werkstückes, welches noch durch die Arbeitsspindeleinheit in Rotation versetzt werden kann.

In den Bearbeitungspositionen im Sinne der vorliegenden Anmeldung erfolgt hauptsächlich eine Bearbeitung der Werkstücke. Zusätzlich zu diesen Bearbeitungspositionen können eine oder mehrere Positionen um die zentrale Achse vorgesehen sein, an denen die unbearbeiteten oder bearbeiteten Werkstücke den Arbeitsspindeleinheiten zugeführt und/oder entnommen werden können. Diese Zufuhr oder Entnahme kann dabei manuell oder auch mittels geeigneter Zufuhr- bzw. Entnahmeeinheiten erfolgen.

Weitere vorteilhafte Ausführungsformen ergeben sich aus den Unteransprüchen.

Eine beispielhafte Ausführungsform der Erfindung wird nachstehend anhand der Figuren erläutert. In den Figuren zeigen:
- Fig. 1: eine Draufsicht auf den erfindungswesentlichen Ausschnitt einer Werkzeugmaschine;
- Fig. 2: eine Darstellung zur Positionierung einer Arbeitsspindeleinheit;
- Fig. 3: eine Darstellung einer Brückeneinheit mit zwei Arbeitsspindeleinheiten; und
- Fig. 4: eine Darstellung mit sechs Arbeitsspindeleinheiten.

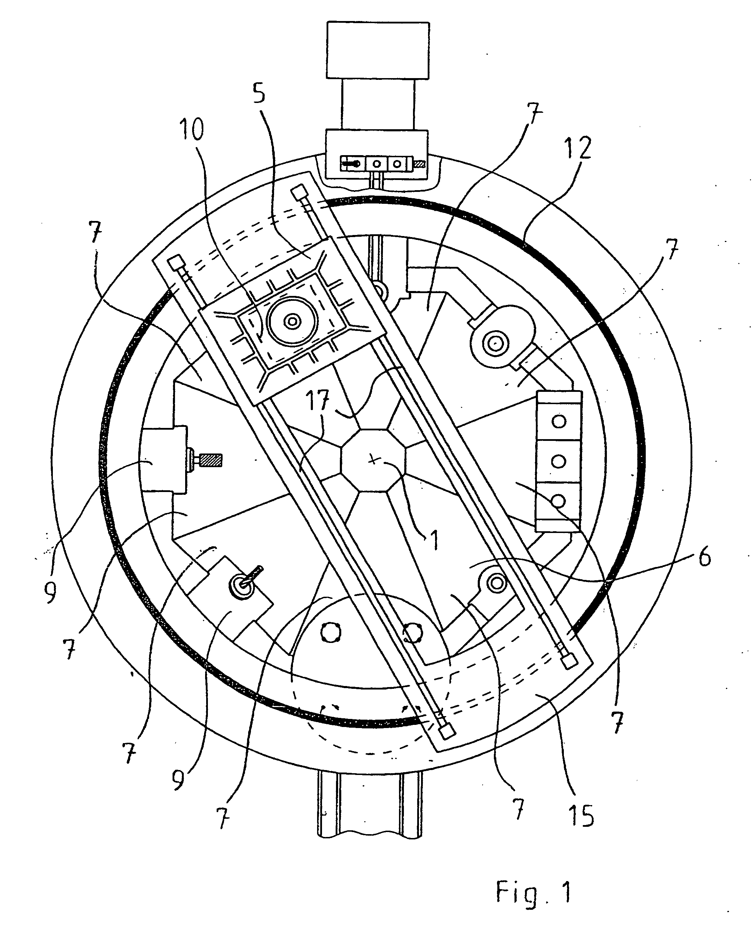

In Fig. 1 ist die Draufsicht auf einen Ausschnitt einer Werkzeugmaschine, hier eines Bearbeitungszentrums, gezeigt. Im Zentrum der Werkzeugmaschine ist eine zentrale Achse 1 vorgesehen, welche in der Darstellung nach Fig. 1 die Zeichenebene senkrecht durchstößt.

Um die zentrale Achse 1 herum sind mehrere Bearbeitungssektoren 7 vorgesehen. Jeder Bearbeitungssektor 7 stellt einen räumlich begrenzten Bereich dar, in dem ein Werkstück bearbeitet werden kann. Für die Bearbeitung eines Werkstückes in einem Bearbeitungssektor sind Werkzeugeinheiten 9 mit Werkzeugen vorgesehen. Die Werkzeuge können für verschiedene Bearbeitungen vorgesehen sein, insbesondere für typische Bearbeitungen in Bearbeitungszentren, wie beispielsweise Schleifen, Bohren, Fräsen, Drehen etc. Die Werkzeugeinheiten 9 sind dabei vorteilhafterweise so angeordnet, dass sie mit dem zu bearbeitenden Werkstück leicht in Kontakt gebracht werden können.

Die Anzahl der Bearbeitungssektoren 7 beträgt in der Darstellung nach Fig. 1 acht. Ein Bearbeitungssektor 7 kann dabei auch für die Zufuhr oder Entnahme eines Werkstücks ausgebildet sein, so dass statt der Werkzeugeinheit 9 eine entsprechende Transporteinrichtung vorgesehen ist.

Vertikal oberhalb der Bearbeitungssektoren 7 ist eine Brückeneinheit 15 vorgesehen. Die Brückeneinheit 15 überspannt einen gedachten Kreis um die zentrale Achse 1, innerhalb dessen die Bearbeitungssektoren 7 angeordnet sind. Die Brückeneinheit 15 ist schwenkbar um die zentrale Achse 1 angeordnet, wobei ein gedachter Schnittpunkt zwischen der zentralen Achse 1 und der Brückeneinheit 15 genau im Zentrum der Brückeneinheit 15 läge. Die Brückeneinheit 15 stützt sich durch zwei in Fig. 1 nicht näher hervorgehobene Stützen auf einer Führungsbahn 12 ab. Die Führungsbahn 12 ist kreisförmig um die zentrale Achse 1 außerhalb der Bearbeitungssektoren 7 angeordnet. Bei ihrer Rotation um die zentrale Achse 1 gleitet die Brückeneinheit 15 auf ihren Stützen bzw. nicht näher dargestellten Gleit- oder Rollelementen entlang der Führungsbahn 12.

In der Draufsicht nach Fig. 1 ist in der Brückeneinheit 15 eine Aussparung 6 zu erkennen. Die Aussparung 6 erstreckt sich im Wesentlichen von einem Ende der Brückeneinheit bis zum gegenüber liegenden anderen Ende. Durch die Aussparung 6 ragt eine Arbeitsspindeleinheit 5 in eine Bearbeitungsposition innerhalb eines Bearbeitungssektors 7. Die Arbeitsspindeleinheit 5 erstreckt sich dabei senkrecht zur Zeichenebene nach unten und liegt mit einer Halterung, welche die Breite der Aussparung 6 übersteigt, auf der Brückeneinheit 15 auf.

Die Arbeitsspindeleinheit 5 ist auf zwei Schienen gelagert, welche auf der Oberseite der Brückeneinheit 15 parallel zueinander so angeordnet sind, dass sie für die zwischen den Schienen in der Aussparung bewegliche Arbeitsspindeleinheit 5 eine Laufbahn 17 bilden. Die Laufbahn 17 erstreckt sich im Wesentlichen von einem Ende der Brückeneinheit 15 zum gegenüber liegenden anderen Ende. Die Arbeitsspindeleinheit 5 ist somit entlang der Laufbahn 17 innerhalb der Aussparung 6 von einem Ende der Brückeneinheit 15 zum anderen Ende beweglich. Die Bewegung wird über einen nicht näher dargestellten Antriebsmechanismus realisiert.

An dem den Bearbeitungssektoren 7 zugewandten unteren Ende der Arbeitsspindeleinheit 5 ist durch eine geeignete, nicht näher dargestellte Haltevorrichtung eine Werkstück 10 gehalten, welches in Fig. 1 durch die gestrichelte Linie angedeutet sein soll. Die Arbeitsspindeleinheit 5 ist so ausgebildet, dass die Halterung für das Werkstück 10 vertikal, also senkrecht zur Zeichenebene, verschiebbar ist. Weiterhin ist die Arbeitsspindeleinheit dazu ausgebildet, die Werkstückhalterung mit dem Werkstück 10 in Rotation zu versetzen, um beispielsweise eine Dreh- oder Schleifbearbeitung zu ermöglichen.

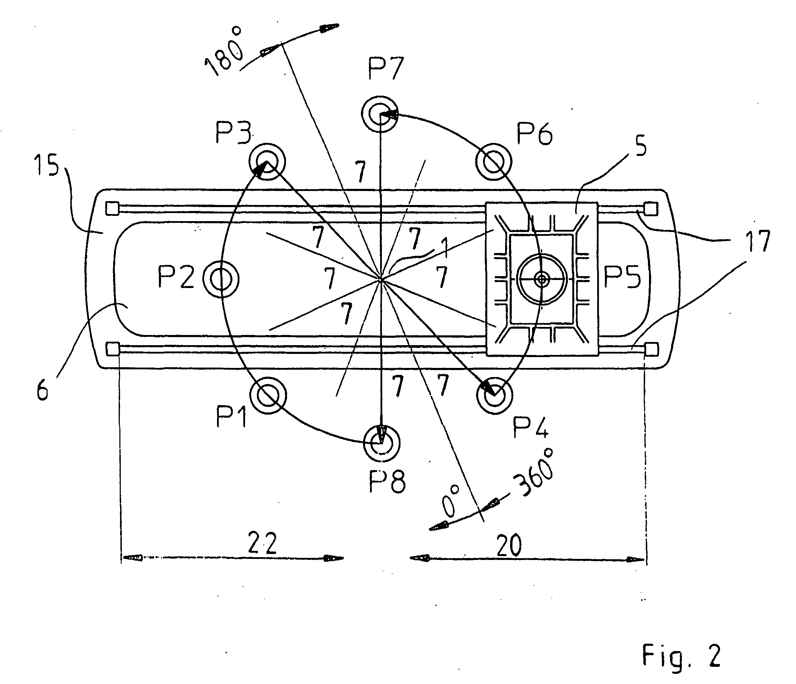

In der Darstellung nach Fig. 2 ist die Arbeitsspindeleinheit 5 in einem ersten Spindellagenbereich 20 auf der Brückeneinheit 15 dargestellt. Durch Schwenk- bzw. Rotationsbewegungen der Brückeneinheit 15 um die zentrale Achse 1 kann die Arbeitsspindeleinheit 5 so bewegt werden, dass das an der Arbeitsspindeleinheit 5 gehaltene Werkstück 10 in die einzelnen - in Fig. 2 nur angedeuteten - Bearbeitungssektoren 7 gelangt und dort Bearbeitungspositionen P 1 bis P8 einnimmt.

Im vorliegenden Ausführungsbeispiel würde bei acht Bearbeitungssektoren 7 eine Schwenkung der Brückeneinheit 15 um 45° gegen den Uhrzeigersinn dazu führen, dass die Arbeitsspindeleinheit 5 aus der in der Fig. 2 als momentane Bearbeitungsposition P5 dargestellten Lage in den links benachbarten Bearbeitungssektor 7 bewegt würde, um dort die Bearbeitungsposition P6 einzunehmen.

Die Positionierung der Arbeitsspindeleinheit 5 innerhalb des Bearbeitungssektors 7 kann dabei auch dadurch erfolgen, dass der Schwenkwinkel der Brückeneinheit 15 größer oder kleiner als 45° gewählt wird, wenn die Arbeitsspindeleinheit 5 nicht zentrisch in dem angewendeten Bearbeitungssektor 7 angeordnet werden soll. Das an der Arbeitsspindel 5 befestigte Werkstück 10 kann dann durch vertikale Bewegung der Werkstückhalterung der Arbeitsspindeleinheit 5 mit dem Werkzeug der Werkzeugeinheit 9 des jeweiligen Bearbeitungssektors 7 in Kontakt gebracht werden, so dass eine Bearbeitung erfolgen kann.

Bei einer durch die Arbeitsspindeleinheit 5 veranlassten Rotation des Werkstücks 10 könnte beispielsweise eine Drehbearbeitung des Werkstücks 10 erfolgen, indem die Arbeitsspindeleinheit 5 das Werkstück 10 in vertikaler Bewegung an einem Drehmeißel einer Werkzeugeinheit 9 entlang bewegt. In ähnlicher Weise ist ein Schleif- oder Fräsvorgang denkbar.

Um das Werkstück 10 mit einem in radialer Richtung nicht beweglichen Werkzeug einer Werkzeugeinheit 9 in Kontakt bringen zu können kann die Arbeitsspindeleinheit 5 entlang der Laufbahn 17 vorzugsweise in dem ersten oder zweiten Spindellagenbereich 20, 22 der Brückeneinheit 15 verschoben werden. Damit ist es möglich, das von der Arbeitsspindeleinheit 5 gehaltene Werkstück 10 in jedem Bearbeitungssektor 7 in drei Dimensionen zu bewegen:
a) in tangentialer Richtung durch Schwenken der Brückeneinheit 15,
b) in vertikaler Richtung durch vertikales Verfahren der Werkzeughalterung in der Arbeitsspindeleinheit 5,
c) in radialer Richtung durch Verfahren der Arbeitsspindeleinheit 5 entlang der Laufbahn 17 der Brückeneinheit 15.

Ein Werkstück 10 kann auf diese Weise nacheinander in verschiedenen Bearbeitungssektoren 7 einer Bearbeitung unterzogen werden, wobei die Annäherung an das in dem Bearbeitungssektor 7 angeordnete Werkzeug einer Werkzeugeinheit 9 durch die vorgenannten Bewegungsmöglichkeiten realisiert werden kann.

Grundsätzlich besteht die Möglichkeit, in einem Bearbeitungssektor 7 auch mehrere Werkzeugeinheiten 9 anzuordnen, so dass ein Werkstück 10 innerhalb eines Bearbeitungssektors 7 durch entsprechende Positionierung mehrere Bearbeitungsschritte durchlaufen kann.

Die Positionierung der Arbeitsspindeleinheit 5 bzw. des daran gehaltenen Werkstückes 10 an den einzelnen Bearbeitungspositionen P1 bis P8 in den Bearbeitungssektoren 7 kann dabei wie folgt ablaufen:
a) Zunächst sei das Werkstück 10 in dem Bearbeitungssektor positioniert, in dem die Bearbeitungsposition P5 liegt. Die Arbeitsspindeleinheit 5 sei dabei zunächst in dem ersten Spindellagenbereich 20 der Brückeneinheit 15 angeordnet.
b) Der nächste Bearbeitungsschritt sei im links benachbarten Bearbeitungssektor vorgesehen. Dazu wird die Arbeitsspindeleinheit 5 (gegebenenfalls unter vertikaler Bewegung des Werkstücks 10) durch Schwenken der Brückeneinheit 15 um ca. 45° in den Bereich diese Bearbeitungssektors bewegt, um die Bearbeitungsposition P6 einzunehmen.
   Die Annäherung des Werkstücks 10 an das Werkzeug der Werkzeugeinheit 9 kann dabei insbesondere wieder durch die vertikale Bewegung der Arbeitsspindeleinheit 5 bzw. deren radiale Verschiebung innerhalb des ersten Spindellagenbereichs 20 geschehen.
c) Der nächste Bearbeitungsschritt sei an der Position P7 geplant, wohin die Arbeitsspindeleinheit 5 mit dem daran gehaltenen Werkzeug 10 insbesondere durch Schwenken der Brückeneinheit in gleicher Weise wie zuvor bewegt wird.
d) Der nächste Arbeitsschritt sei nun im gegenüberliegenden Bearbeitungssektor an der Bearbeitungsposition P8 vorgesehen. Um die Arbeitsspindeleinheit 5 in diesen Sektor zu bewegen, wird sie (gegebenenfalls wieder unter vorheriger vertikaler Bewegung des Werkstücks 10) entlang der Laufbahn 17 der Brückeneinheit 15 aus dem ersten Spindellagenbereich 20 in den zweiten Spindellagenbereich 22 verfahren. Die Arbeitsspindeleinheit 5 gelangt auf diese Weise in den als nächsten vorgesehenen Bearbeitungssektor, ohne das die Brückeneinheit 15 geschwenkt werden müsste. Die Annäherung des Werkstücks 10 an das Werkzeug in diesem Bearbeitungssektor erfolgt wieder in bekannter Weise.
e) Die Positionierung der Arbeitsspindeleinheit 5 an der für den nächsten Bearbeitungsschritt vorgesehenen Bearbeitungsposition P1 im benachbarten Bearbeitungssektor erfolgt dann durch Schwenken der Brückeneinheit 15 entgegen ihrer vorherigen Schwenkbewegung, so dass der erste, nun von der Arbeitsspindeleinheit 5 nicht mehr belegte Spindellagenbereich 20 wieder oberhalb der Bearbeitungsposition P6 zu liegen kommt, und der zweite, nun von der Arbeitsspindeleinheit 5 belegte Spindellagenbereich 22 oberhalb der Bearbeitungsposition P1 in dem entsprechenden Bearbeitungssektor liegt.
f) Die Positionierung der Arbeitsspindeleinheit 5 in den als nächstes vorgesehenen Bearbeitungsposition P2 und P3 erfolgt in gleicher Weise im Wesentlichen durch Schwenken der Brückeneinheit 15, ohne das die Arbeitsspindeleinheit 5 ihrer zweiten Spindellagenbereich verlassen muss.
g) In der Bearbeitungsposition P3 könnte beispielsweise die Entnahme des fertig bearbeiteten Werkstücks 10 bzw. die Zufuhr eines neu zu bearbeitenden Werkstücks 10 vorgesehen sein. Um aus diesem Bearbeitungssektor wieder an den Anfang der Bearbeitungsfolge in die Bearbeitungsposition P4 bzw. in den zugehörigen Bearbeitungssektor zu gelangen, wird die Arbeitsspindeleinheit 5 wieder aus ihrem zweiten Spindellagenbereich in den ersten Spindellagenbereich auf der anderen Hälfte der Brückeneinheit 15 gefahren. Die Bearbeitung kann dann von Neuem beginnen.

Zur Positionierung der Arbeitsspindeleinheit 5 in allen Bearbeitungssektoren 7 ist es somit ausreichend, die Brückeneinheit um nicht mehr als 180° hin- und herzuschwenken, wenn die Arbeitsspindeleinheit 5 dabei, wie beschrieben, von einem Spindellagenbereich 20 in den anderen Spindellagenbereich 22 bzw. zurückbewegt werden kann.

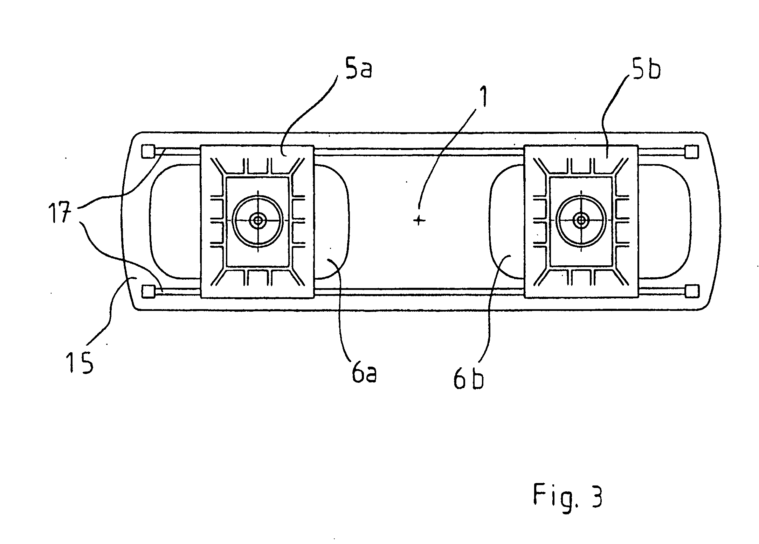

In Fig. 3 ist eine Brückeneinheit 15 gezeigt, in der zwei Arbeitsspindeleinheiten 5a und 5b geführt werden. Die Arbeitsspindeleinheit 5a ist dabei innerhalb einer ersten Aussparung 6a verschiebbar, die Arbeitsspindeleinheit 5b ist in einer zweiten Aussparung 6b verschiebbar. Beide Arbeitsspindeleinheiten 5a und 5b werden dabei durch eine bereits aus Fig. 1 bekannte Laufbahn 17 geführt, welche in Fig. 3 durchgehend von einem Brückenende zum anderen ausgebildet ist.

Denkbar ist hier auch eine Unterbrechung der Laufbahn 17 in dem Bereich der Brückeneinheit 15, den die Arbeitsspindeleinheiten 5a und 5b aufgrund der durch die Form der Aussparungen 6a, 6b beschränkten Bewegungsfreiheit nicht erreichen können. Die Brückeneinheit 15 ist dabei in gewohnter Weise um die zentrale Achse 1 der Werkzeugmaschine schwenkbar, so wie dies in dem Ausführungsbeispiel nach Fig. 1 beschrieben ist.

Allerdings ist hier ein Verfahren der Arbeitsspindeleinheiten 5a bzw. 5b in eine Position auf der anderen Hälfte der Brückeneinheit 15 nicht mehr vorgesehen. Demgegenüber sind hier zwei Arbeitsspindeleinheiten 5a, 5b vorgesehen, so dass durch geeignete Auswahl der jeweiligen Arbeitsschritte und der Bearbeitungssektoren 7 die Gesamtbearbeitungsdauer optimiert gestaltet werden kann.

Auch für diese Ausführungsform ist die radiale Verschiebbarkeit der Arbeitsspindeleinheiten vorgesehen, die innerhalb der Aussparung 6a und 6b erfolgen kann und die dreidimensionale Positionierungsbewegung des Werkstücks innerhalb der einzelnen Bearbeitungssektoren ermöglicht.

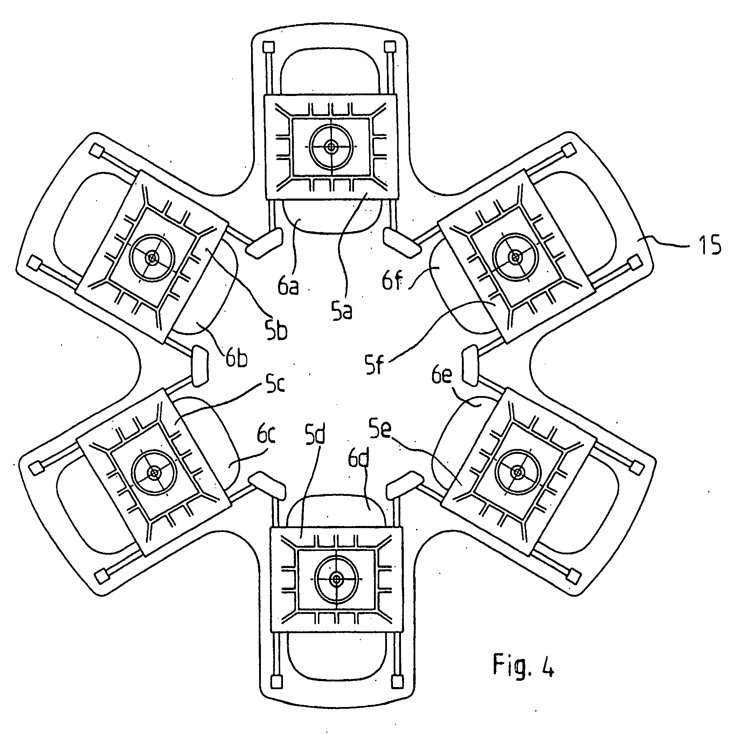

In Fig. 4 ist eine Brückeneinheit 15 dargestellt, welche für die Aufnahme von sechs Arbeitsspindeleinheiten 5a bis 5f vorgesehen ist. Jede Arbeitsspindeleinheit ist dabei wieder innerhalb einer ihr zugeordneten Aussparung 6a bis 6f radial beweglich. Eine solche Brückeneinheit 15 wäre denkbar beispielsweise für eine Werkzeugmaschine mit sechs Bearbeitungssektoren 7, wobei jede Arbeitsspindeleinheit 5a bis 5f ein entsprechendes Werkstück 10 halten und in dem entsprechenden Bearbeitungssektor 7 einer Bearbeitung zuführen könnte.

Durch Schwenkbewegung dieser Brückeneinheit 15 um 60° gelangen die Arbeitsspindeleinheiten 5a bis 5f jeweils in den benachbarten Bearbeitungssektor 7, um dort einen weiteren Bearbeitungsschritt abzuwickeln.

Durch Annäherung der Anzahl der pro Brückeneinheit 15 gehaltenen Arbeitsspindeleinheiten 5 an die Anzahl der pro Werkzeugmaschine vorgesehene Bearbeitungssektoren 7 bzw. durch Auswahl eines ganzzahligen Verhältnisses der Anzahl der Bearbeitungssektoren 7 zur Anzahl der Arbeitsspindeleinheiten 5 kann eine zeitsparende Bearbeitungsfolge für die Werkstücke weiter optimiert werden.

## Patentansprüche

1. Werkzeugmaschine, vorzugsweise Bearbeitungszentrum,
a) mit wenigstens einer um eine zentrale Achse (1) rotierbar angeordneten Arbeitsspindeleinheit (5), wobei
b) die wenigstens eine Arbeitsspindeleinheit (5) durch Rotation um die zentrale Achse (1) in einer Positionierbewegung in wenigstens eine, um die zentrale Achse (1) angeordnete Bearbeitungsposition (P1 bis P8) positionierbar ist, und
c) in dieser wenigstens einen Bearbeitungsposition (P1 bis P8) Werkzeugeinheiten (9) vorgesehen oder vorsehbar sind,
**dadurch gekennzeichnet**,
d) dass die wenigstens eine Arbeitsspindeleinheit (5) in radialer Richtung relativ zur zentralen Achse (1) bewegbar ist.

2. Werkzeugmaschine nach Anspruch 1, **dadurch gekennzeichnet, dass** die Bewegung der wenigstens einen Arbeitsspindeleinheit (5) in radialer Richtung unabhängig von der Positionierbewegung durchführbar ist.

3. Werkzeugmaschine nach Anspruch 2, **dadurch gekennzeichnet, dass** die wenigstens eine Arbeitsspindeleinheit (5) auf einer Brückeneinheit (15) angeordnet ist, wobei die Brückeneinheit (15) die Positionierbewegung ausführt und die Arbeitsspindeleinheit (5) ihre radiale Bewegung entlang einer Laufbahn (17) auf der Brückeneinheit (15) ausführt.

4. Werkzeugmaschine nach Anspruch 3, **dadurch gekennzeichnet, dass** die Brückeneinheit (15) um die zentrale Achse (1) rotatorische Bearbeitungsbewegungen durchführt.

5. Werkzeugmaschine nach Anspruch 3 oder 4, **dadurch gekennzeichnet, dass** die Brückeneinheit (15) auf wenigstens einer um die zentrale Achse (1) angeordneten Führungsbahn (12) bewegt wird.

6. Werkzeugmaschine nach Anspruch 5, **dadurch gekennzeichnet, dass** die Brückeneinheit (15) entlang der Führungsbahn (12) durch Gleitschuhe, Gleit- oder Rollenlager geführt ist und von wenigstens einem oder von symmetrisch zur zentralen Achse (1) angeordneten Antrieben bewegt wird.

7. Werkzeugmaschine nach einem der Ansprüche 3 bis 6, **dadurch gekennzeichnet, dass** die Laufbahn (17) sich von einem ersten Spindellagenbereich (20) auf einer Seite der Brückeneinheit (15) diametral über die zentrale Achse (1) hinweg bis zu einem dem ersten Spindellagenbereich (20) gegenüberliegenden zweiten Spindellagenbereich (22) erstreckt.

8. Werkzeugmaschine nach einem der Ansprüche 3 bis 7, **dadurch gekennzeichnet, dass** zur Positionierung der Arbeitsspindeleinheit (5) an den Bearbeitungspositionen (P1 bis P8) die Brückeneinheit (15) eine Schwenkbewegung um die zentrale Achse (1) um einen Winkel von 0° bis 180° ausführt, wobei
a die Positionierung an in einem Sektor von 0° bis 180° um die zentrale Achse (1) angeordneten Bearbeitungspositionen (P1 bis P8) mit der in den ersten Spindellagenbereich (20) bewegten Arbeitsspindeleinheit (5) erfolgt, und
b die Positionierung an in einem Sektor von 180° bis 360° um die zentrale Achse (1) angeordneten Bearbeitungspositionen (P1 bis P8) mit der in den zweiten Spindellagenbereich (22) herüberbewegten Arbeitsspindeleinheit (5) erfolgt.

9. Werkzeugmaschine nach Anspruch 8, **dadurch gekennzeichnet, dass** eine Steuereinheit zur Steuerung der Positionierbewegung und der Bewegung der Arbeitsspindeleinheit (5) entlang der Laufbahn (17) vorgesehen ist, welche die Bewegungen so steuert, dass Positionierung der Arbeitsspindeleinheit (5) zeitoptimiert erfolgt.

10. Werkzeugmaschine nach Anspruch 7, **dadurch gekennzeichnet, dass** zwei Arbeitsspindeleinheiten (5) vorgesehen sind, von denen je eine in dem ersten und eine in dem zweiten Spindellagenbereich (20, 22) angeordnet ist.

11. Werkzeugmaschine nach einem der Ansprüche 3 bis 6, **dadurch gekennzeichnet, dass** die Brückeneinheit (15) so ausgebildet ist, dass sie wenigstens drei über einen Umfang um die zentrale Achse (1) angeordnete Arbeitsspindeleinheiten (5) aufnimmt, wobei wenigstens eine Arbeitsspindeleinheit (5) in einem Spindellagenbereich (6) entlang eines Brücksegments radial verschiebbar ist.

## Claims

1. Machine tool, preferably machining centre,
a) with at least one work spindle unit (5) arranged rotatably about a central axis (I), wherein
b) the at least one work spindle unit (5) can be positioned in a positioning movement by rotation about the central axis (1) into at least one machining position (P1 to P8) arranged about the central axis (1), and
c) in this at least one machining position (P1 to P8) tool units (9) are or can be provided,
**characterised in that**
d) the at least one work spindle unit (5) can be moved in the radial direction relative to the central axis (1).

2. Machine tool according to claim 1, **characterised in that** the movement of the at least one work spindle unit (5) in the radial direction can be performed independently of the positioning movement.

3. Machine tool according to claim 2, **characterised in that** the at least one work spindle unit (5) is arranged on a bridge unit (15), the bridge unit (15) performing the positioning movement and the work spindle unit (5) performing its radial movement along a slide way (17) on the bridge unit (15).

4. Machine tool according to claim 3, **characterised in that** the bridge unit (15) performs rotational machining movements about the central axis (1).

5. Machine tool according to claim 3 or 4, **characterised in that** the bridge unit (15) is moved on at least one guideway (12) arranged about the central axis (1).

6. Machine tool according to claim 5, **characterised in that** the bridge unit (15) is guided along the guideway (12) by guide shoes, slide or roller bearings and is moved by at least one drive or drives arranged symmetrically to the central axis (1).

7. Machine tool according to any of claims 3 to 6, **characterised in that** the slide way (17) extends from a first spindle bearing area (20) on one side of the bridge unit (15) diametrically over the central axis (1) to a second spindle bearing area (22) opposite the first spindle bearing area (20).

8. Machine tool according to any of claims 3 to 7, **characterised in that** to position the work spindle unit (5) at the machining positions (P1 to P8), the bridge unit (15) performs a swivel movement about the central axis (1) through an angle from 0° to 180°, wherein
a) the positioning at machining positions (P1 to P8) arranged in a sector from 0° to 180° about the central axis (1) takes place with the work spindle unit (5) moved in the first spindle bearing area (20), and
b) the positioning at machining positions (P1 to P8) arranged in a sector from 180° to 360° about the central axis (1) takes place with the work spindle unit (5) moved across to the second spindle bearing area (22).

9. Machine tool according to claim 8, **characterised in that** a control unit is provided to control the positioning movement and the movement of the work spindle unit (5) along the slide way (17), which unit controls the movements so that positioning of the work spindle unit (5) takes place time-optimised.

10. Machine tool according to claim 7, **characterised in that** two work spindle units (5) are provided, of which one is arranged in the first and one in the second spindle bearing area (20, 22).

11. Machine tool according to any of claims 3 to 6, **characterised in that** the bridge unit (15) is formed so that it holds at least three work spindle units (5) arranged over a periphery about the central axis (1), at least one work spindle unit (5) being moveable radially along a bridge segment in a spindle bearing area (6).

## Revendications

1. Machine - outil, de préférence centre d'usinage,
a) avec au moins une unité de broche de travail (5) disposée rotativement autour d'un axe central (1), dans laquelle
b) la au moins une unité de broche de travail (5) par rotation autour de l'axe central (1) selon un déplacement de positionnement peut être positionnée dans au moins une position d'usinage (P1 à P8) agencée autour de l'axe central (1), et
c) dans cette au moins une position d'usinage (P1 à P8) des unités d'outils (9) sont prévues ou peuvent être prévues,
**caractérisée en ce que**
d) la au moins une unité de broche d'usinage (5) est déplaçable en direction radiale relativement à l'axe central (1).

2. Machine - outil selon la revendication 1, **caractérisée en ce que** le déplacement de la au moins une unité de broche d'usinage (5) en direction radiale est exécutable indépendamment du déplacement de positionnement.

3. Machine - outil selon la revendication 2, **caractérisée en ce que** la au moins une unité de broche de travail (5) est disposée sur une unité de pont (15), dans laquelle l'unité de pont (15) exécute le déplacement de positionnement et l'unité de broche de travail (5) exécute son déplacement radial sur l'unité de pont (15) le long d'une voie de circulation (17).

4. Machine - outil selon la revendication 3, **caractérisée en ce que** l'unité de pont (15) effectue des déplacements rotatifs d'usinage autour de l'axe central (1).

5. Machine - outil selon la revendication 3 ou 4, **caractérisée en ce que** l'unité de pont (15) est déplacée sur au moins une voie de guidage (12) disposée autour de l'axe central (1).

6. Machine - outil selon la revendication 5, **caractérisée en ce que** l'unité de pont (15) est guidée le long de la voie de guidage (12) par un coulisseau, un palier à glissement ou un roulement à rouleaux, et est déplacée par au moins un ou des mécanismes d'entraînement agencés symétriquement par rapport à l'axe central (1).

7. Machine - outil selon l'une des revendications 3 à 6, **caractérisée en ce que** la voie de circulation (17) s'étend diamétralement à travers l'axe central (1), depuis une première zone (20) d'implantation de la broche située sur un côté de l'unité de pont (15) jusqu'à une seconde zone (22) d'implantation de la broche opposée à la première zone (20) d'implantation de la broche.

8. Machine - outil selon l'une des revendications 3 à 7, **caractérisée en ce que** pour le positionnement de l'unité de broche de travail (5) dans les positions d'usinage (P1 à P8), l'unité de pont (15) exécute autour de l'axe central (1) un mouvement de pivotement d'un angle de 0° à 180°, dans laquelle
a) le positionnement dans des positions d'usinage (P1 à P8) disposées autour de l'axe central (1) dans un secteur de 0° à 180° est effectué par l'unité de broche de travail (5) déplacée dans la première zone (20) d'implantation de la broche, et
b) le positionnement dans des positions d'usinage (P1 à P8) agencées dans un secteur de 180° à 360° autour de l'axe central (1) est effectué par l'unité de broche de travail (5) déplacée dans la seconde zone (22) d'implantation de la broche.

9. Machine - outil selon la revendication 8, **caractérisée en ce qu'**il est prévu un dispositif de commande pour la commande du déplacement de positionnement et du déplacement de l'unité de broche de travail (5) le long de la voie de circulation (17), qui commande les déplacements en sorte que le positionnement de l'unité de broche de travail (5) est optimisé dans le temps.

10. Machine - outil selon la revendication 7, **caractérisée en ce qu'**il est prévu deux unités de broche de travail (5), dont l'une est disposée dans la première zone (20) d'implantation de broche et l'une dans la seconde zone (22) d'implantation de broche.

11. Machine - outil selon l'une des revendications 3 à 6, **caractérisée en ce que** l'unité de pont (15) est agencée en sorte qu'elle reçoit au moins trois unités de broche de travail (5) disposées sur une circonférence autour de l'axe central (1), et au moins une unité de broche de travail (5) est déplaçable radialement en translation le long d'un segment de pont dans une zone (6) d'implantation de broche.
